# EUROPÄISCHE PATENTSCHRIFT

(11) **EP 0 868 349 B1**
(45) Veröffentlichungstag und Bekanntmachung des Hinweises auf die Patenterteilung: **16.02.2000**
(21) Anmeldenummer: 96938898.2
(22) Anmeldetag: 02.12.1996
(51) Int. Cl.: B65B 23/14, B65B 59/00, B65G 59/06

(54) **VORRICHTUNG ZUM BILDEN VON GRUPPEN VON AUFEINANDERLIEGENDEN, SCHEIBENFÖRMIGEN PRODUKTEN**
DEVICE FOR FORMING GROUPS OF STACKED DISC-LIKE PRODUCTS
DISPOSITIF POUR LA FORMATION DE GROUPES DE PRODUITS EN FORME DE DISQUES EMPILES

(30) Priorität: 15.12.1995 CH 355795
(43) Veröffentlichungstag der Anmeldung: 07.10.1998
(73) Patentinhaber: SIG Pack Systems AG, 8222 Beringen (CH)
(72) Erfinder: LOEWENTHAL, Horst, D-79761 Waldshut-Tiengen (DE); WIPF, Alfred, D-79798 Jestetten (DE)
(74) Vertreter: Münch, Otto, Dipl.-Ing.
(86) Internationale Anmeldenummer: CH9600423
(87) Internationale Veröffentlichungsnummer: WO9722521

(56) Entgegenhaltungen:
- GB-A- 962 446
- GB-A- 1 111 619

## Beschreibung

Aus der GB-PS 1 001 036 (CH-PS 400 892) ist eine Vorrichtung gemäss Oberbegriff des Anspruchs 1 bekannt. Von einer umlaufenden Kette stehen auf einer horizontalen Arbeitsstrecke in regelmässigen Abständen Finger nach oben ab. Oberhalb der Arbeitsstrecke sind zwei Schächte hintereinander angeordnet, welche Stapel von flach aufeinander liegenden, scheibenförmigen Produkten enthalten. Die Schächte sind unten mit Abstand oberhalb der Kette durch einen geschlitzten Boden abgeschlossen und am unteren Ende in Transportrichtung offen. Die Finger durchgreifen jeweils den Schlitz der Bodenplatte und schieben dabei das unterste Produkt aus. Das aus dem ersten Schacht ausgeschobene Produkt wird unter der Bodenplatte des zweiten Schachtes durchgeschoben, so dass das aus diesem Schacht ausgeschobene Produkt auf das zuerst ausgeschobene zu liegen kommt. Jeweils zwei dieser Produktgruppen werden schliesslich zusammen verpackt. Diese Vorrichtung hat sich bewährt. Allerdings ist sie wenig flexibel.

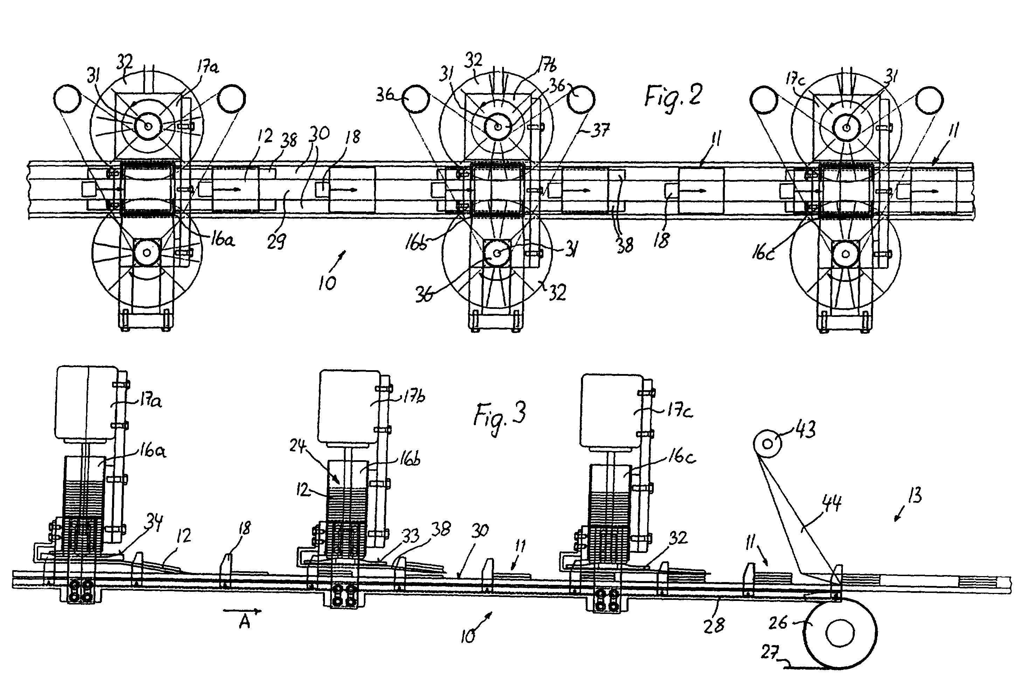

In der GB-A-1 111 619 ist eine Vorrichtung zum Vereinzeln von Biskuits aus einem Schacht bekannt. Ein umlaufendes Rad unterhalb des Schachtes hat mehrere Schieber, welche jeweils das unterste Biskuit im Schacht auf ein Förderband ausschieben. Bei der Ausführungsform nach Figur 3 hat der Schacht am unteren Ende ein in der Höhe verstellbares Gleitblech als Unterstellmittel, das nach einer vorgegebenen Anzahl ausgeschobener Biskuits angehoben wird, damit keine weiteren ausgeschoben werden. Die abgemessene Anzahl Biskuits wird durch das Förderband einer Verpakkungsmaschine zugeführt. Bei der Zufuhr zum Schacht ist ein Produktfühler angeordnet, der bei mangelhaftem Nachschub von Biskuits jeweils am Ende eines gerade laufenden Zählzyklus das weitere Ausschieben von Biskuits für ein ganzzahliges Vielfaches eines Zählzyklus unterbricht. Die Biskuits oder Biskuitstapel werden deshalb der Verpackungsmaschine mit Lücken von einem oder mehreren Takten zugeführt, was beim Verpacken zu Leerpackungen führt und Störungen verursachen kann.

Die GB-A-962 442 beschreibt eine ähnliche Vorrichtung wie die GB-A-1 001 036.

Der vorliegenden Erfindung liegt die Aufgabe zugrunde, eine Vorrichtung der eingangs genannten Art derart auszubilden, dass trotz schwankender Produktzufuhr zu den einzelnen Schächten eine regelmässige Zufuhr von Produktgruppen zu einer Verpackungsmaschine ermöglicht wird, und dass sie flexibel einsetzbar ist. Diese Aufgabe wird durch die Merkmalskombination der Ansprüche gelöst.

Nachfolgend werden Ausführungsbeispiele der Erfindung anhand der Zeichnung erläutert. Darin zeigt:
- Figur 1: Ein Schema der Steuereinrichtung der Vorrichtung,
- Figur 2: eine Draufsicht auf eine erste Ausführungsform,
- Figur 3: eine Seitenansicht,
- Figur 4: eine Draufsicht auf ein Detail in vergrössertem Massstab,
- Figur 5: einen Querschnitt längs der Linie V-V in Figur 4
- Figur 6: eine Draufsicht auf ein Detail einer zweiten Ausführungsform,
- Figur 7: eine Seitenansicht,
- Figur 8: einen Querschnitt, und
- Figuren 9 und 10: eine weitere Ausführungsform.

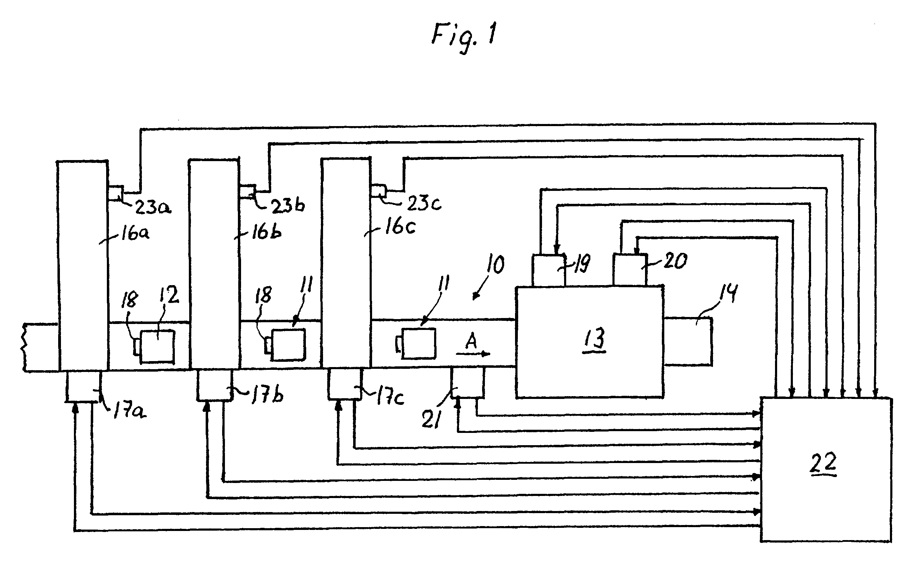

In Figur 1 ist ein Schema der Steuerung einer erfindungsgemässen Vorrichtung dargestellt. Die Vorrichtung umfasst ein Transportorgan 10, das eine sich bildende Gruppe 11 von flachen, aufeinander gestapelten, scheibenförmigen Produkten 12 in Förderrichtung A einer Verpackungsmaschine 13 zuführt, in welcher die Gruppen verpackt werden. Die verpackten Gruppen 11 werden an einen Ausgabeförderer 14 abgegeben. Die Gruppen 11 werden durch Finger 18 des Organs 10 geschoben. Oberhalb des Organs 10 sind in Transportrichtung hintereinander mehrere (im dargestellten Beispiel drei) gekrümmte Schächte 16a, 16b, 16c angeordnet, welchen Produkte 12 flachseitig aneinander anliegend kontinuierlich zugeführt werden. Das untere, über dem Organ 10 liegende Schachtende ist vertikal. Das unterste Produkt 12 jedes Schachtes 16 liegt jeweils auf einem verstellbaren Unterstellmittel auf, welches mittels eines Motors 17a, b, c betätigbar ist. Zumindest in einer der Stellungen des Unterstellmittels wird mindestens das unterste Produkt des betreffenden Schachtes 16 durch einen Finger 18 des Organs 10 ausgeschoben. Das aus dem Schacht 16a ausgeschobene Produkt wird durch den betreffenden Finger 18 unter dem unteren Ende der Schächte 16b und 16c durchgeschoben und dabei gleichzeitig jeweils ein Pro-dukt 12 aus diesen Schächten ausgeschoben, so dass sich die Gruppen 11 von übereinander liegenden Produkten bilden. Die Verpackungsmaschine 13 hat einen Motor 19 zum Bilden einer Längssiegelnaht eines um die Gruppe gefalteten Verpackungsschlauches sowie einen Motor 20 für den Antrieb der Quersiegelbacken. Ferner ist ein Motor 21 für den Antrieb des Transportorgans 10 vorhanden. Alle Motoren 17a-c, 19, 20, 21 sind mit Drehwinkelgebern ausgerüstet, deren Signale an eine gemeinsame Steuereinrichtung 22 zurückgeführt sind. Die Einrichtung 22 steuert diese Motoren. Zusätzlich sind auf die Einrichtung 22 die Signale von Fühlern 23a, 23b, 23c aufgeschaltet, welche die Anwesenheit oder Abwesenheit eines Stapels 24 im betreffenden Schacht 16 bis zur Position dieses Fühlers 23 melden. Der Fühler 23 kann z.B. eine Reflex-Lichtschranke sein.

In den Figuren 2-5 ist eine Ausführungsform der erfindungsgemässen Sammel- und Gruppiervorrichtung dargestellt. Das Transportorgan 10 besteht aus einer über Kettenräder 26 umlaufenden Kette 27, deren oberes Trum die Arbeitsstrecke 28 bildet. Die Finger 18 sind an der Kette 27 befestigt. Sie durchgreifen einen Längsschlitz 29 einer als Sammelführungsmittel dienenden Gleitfläche 30, auf welcher die sich bildenden Gruppen 11 von Scheiben 12 vorgeschoben werden. Die schaltbaren Unterstellmittel am unteren Ende der Schächte 16a-c sind um vertikale Achsen 31 drehbare Scheiben 32. Die Scheiben 32 haben auf ihrer Oberseite mindestens zwei im axialen Abstand voneinander in Radialebenen angeordnete Auflageflächen 33, 34, welche über wendelförmige Schrägflächen 35 miteinander verbunden sind. Der axiale Abstand der Flächen 33, 34 voneinander beträgt annähernd ein ganzzahliges Vielfaches der Dicke der Produkte 12. Eine der Achsen 31 jedes Scheibenpaares ist durch den betreffenden Servomotor 17a-c angetrieben. Die andere Achse des Paares ist mechanisch mit dieser einen Achse für gegensinnige, synchrone Drehung gekoppelt, z.B. über Riemenscheiben 36 mittels eines Zahnriemens 37 oder einer Kette. Stromabwärts der Scheiben sind oberhalb der Gleitflächen 30 je zwei geneigte Gleitbleche 38 angeordnet. Deren oberer Rand ist geringfügig unterhalb des Niveaus der tiefsten Auflagefläche 33. Der untere, stromabwärtige Rand der Gleitbleche 38 ist bei den nacheinander geschalteten Schächten 16a-c progressiv höher. Die Gleitflächen 30 sind seitlich durch Seitenführungen 39 begrenzt zur Führung der sich bildenden Gruppen 11.

In Figur 3 ist das Eintrittsende der Verpackungsmaschine 13 schematisch angedeutet. Von einer Vorratsrolle 43 wird Einschlagmaterial 44 abgezogen und mittels eines nicht dargestellten Faltkastens um die Gruppen 11 gefaltet. Das stromabwärtige Kettenrad 26 ist im Bereich dieses Faltkastens. Die Längsränder der Folie werden anschliessend versiegelt, worauf in bekannter Weise die Quersiegelung zwischen den Gruppen 11 folgt.

Im Normalbetrieb arbeitet die beschriebene Vorrichtung z.B. wie folgt: Eines der Scheibenpaare 32 ist so gedreht, dass das unterste Produkt 12 im betreffenden Schacht 16 auf der unteren Auflagefläche 33 aufliegt und jeweils zwei Produkte 12 ausgeschoben werden. Die anderen Scheibenpaare 32 sind so gedreht, dass das unterste Produkt 12 auf der oberen Auflagefläche 34 aufliegt und nur ein einziges Produkt 12 ausgeschoben wird. Es werden damit Gruppen 11 von vier Produkten 12 gebildet. Im Normalbetrieb, wenn alle Schächte 16 gleichmässig beschickt werden, wird das Erfassen von zwei Produkten gleichmässig auf die drei Schächte 16 verteilt, indem die Scheiben 32 periodisch um 90° gedreht werden. Spricht nun aber in einem der Schächte 16 der Fühler 23 an und meldet das Fehlen von Nachschub, so wird bis zum Abfall dieses Fühlersignals das betreffende Scheibenpaar 32 so gedreht, dass aus diesem Schacht ständig nur ein Produkt entnommen wird. Dadurch kann die ungleichmässige Zufuhr von Produkten 12 zu den Schächten 16 automatisch ausgeglichen werden.

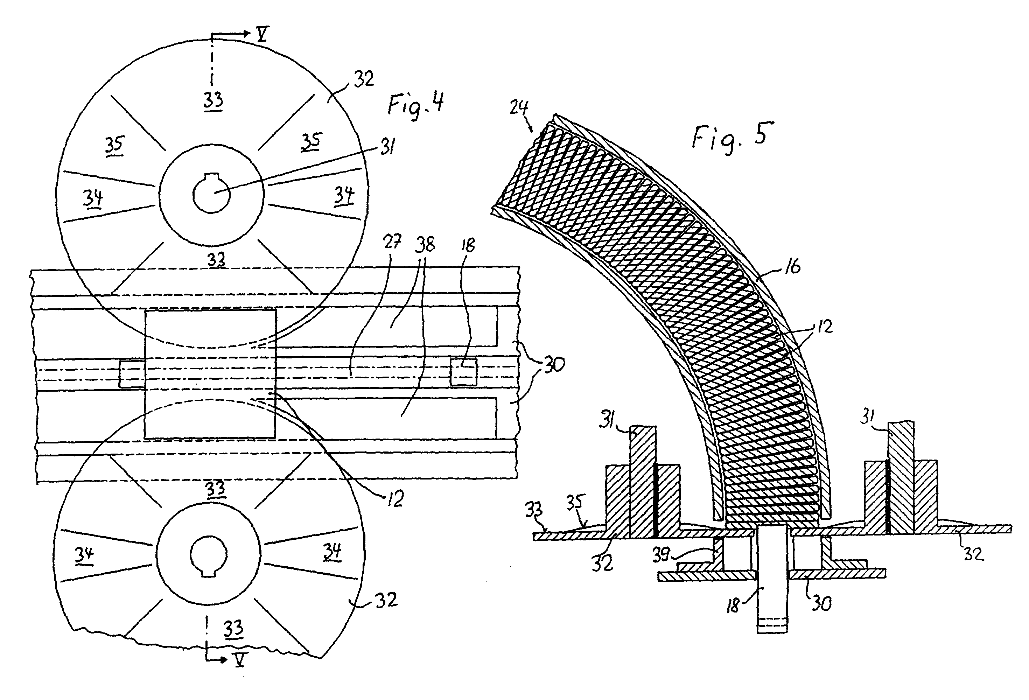

Durch Verstellen der Höhe der Schächte 16 und Scheiben 32 kann die Vorrichtung auch so betrieben werden, dass wahlweise nur ein Produkte 12 oder keines ausgeschoben wird, was in Figur 5 angedeutet ist.

Falls noch grössere Schwankungen der Zufuhrrate ausgeglichen oder falls Gruppen mit mehr als vier Produkten gebildet werden sollen, werden die Scheiben 32 durch solche ersetzt, die Auflageflächen 33, 34 auf drei verschiedenen Niveaus haben, so dass wahlweise kein oder ein Produkt oder zwei Produkte ausgeschoben werden können. Die Vorrichtung ist daher sehr flexibel und leicht an sich ändernde Betriebsbedingungen anpassbar. Die Vorrichtung ermöglicht eine hohe Leistung bei schonender Behandlung und wahlweiser Beschickungsleistung aus den verschiedenen Schächten. Selbstverständlich können auch mehr als drei Schächte 16 mit zugehörigen Schaltmitteln vorgesehen werden.

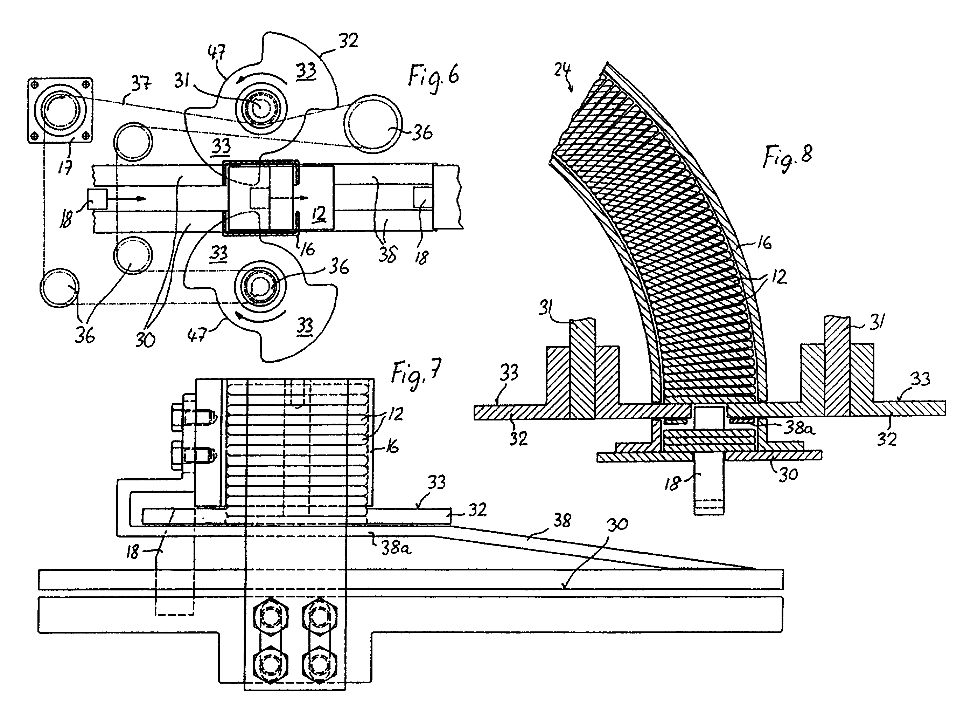

Die zweite Ausführungsform nach Figuren 6-8 unterscheidet sich hauptsächlich dadurch von jener nach Figuren 2-5, dass die Scheiben 32 nur eine einzige in einer Radialebene liegende Auflagefläche 33 aber dafür zwei diametral gegenüberliegende Ausnehmungen 47 aufweisen. Die Dicke der Scheibe 32 beträgt etwas weniger als die doppelte Produktdicke. Die beiden Gleitbleche 38 erstrecken sich mit einem horizontalen Abschnitt 38a unter dem Schacht 16 hindurch unmittelbar unterhalb der Scheibe 32.

Im Betrieb sind die Scheiben 32 entweder so gedreht, dass je eine der Auflageflächen 33 unter dem Schacht 16 ist (Figur 8). In diesem Fall werden mit den Fingern 18 keine Produkte 12 aus dem Schacht 16 ausgeschoben. In der andern Stellung ist je eine Ausnehmung 47 unterhalb des Schachtes, so dass das unterste Produkte 16 auf dem Gleitblechabschnitt 38a ruht (Figur 7). In diesem Fall werden mit den Fingern 18 jeweils zwei Produkte 12 aus dem Schacht 16 ausgeschoben. Das Umschalten von dieser in die erste Position erfolgt jeweils beim Durchgang eines Fingers 18 derart, dass die Auflageflächen 33 unter den Stapel 24 von Produkten 12 im Schacht 16 geschoben werden, solange dieser noch von den gerade ausgeschobenen beiden Produkten 12 gestützt ist (Figur 6). Diese Ausführungsform ist vor allem für weniger empfindliche Produkte 12 geeignet.

Die Scheibendicke kann auch so gewählt werden, dass jeweils nur ein Produkt 12 ausgeschoben wird. Die beiden gegenüberliegenden Flügel der Scheiben 32 mit den Auflageflächen 33 können auch unterschiedlich dick ausgebildet sein, indem der eine nur annähernd die Dicke eines Produktes 12 hat. In diesem Falle können wahlweise 0, 1 oder 2 Produkte 12 ausgeschoben werden. Auch bei der Ausführungsform nach Figuren 6-8 können zwei oder mehr Schächte längs des Transportorgans 10 hintereinander angeordnet werden.

In einer andern Ausführungsform können die verstellbaren Unterstellmittel am unteren Ende der Schächte 16 auch vertikal, z.B. mittels Pneumatikzylindern, in zwei oder mehr Stufen entsprechend der Produktedicke verstellbare Auflageflächen sein.

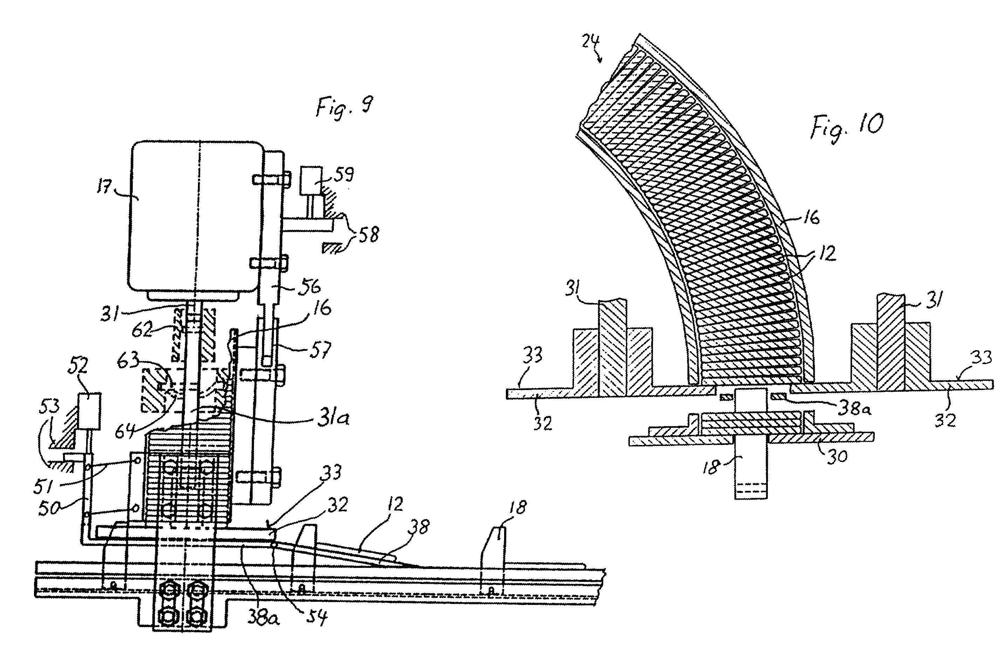

In Figuren 9 und 10 ist eine weitere Ausführungsform entsprechend jener nach Figuren 6 bis 8 dargestellt, also mit Ausnehmungen 47 der Scheiben 32 und horizontalen Gleitblechabschnitten 38a, die sich unter den Schächten 16 erstrecken. Der Durchmesser der Auflageflächen 33 ist in diesem Fall geringer als bei der Ausführungsform nach Figuren 6 bis 8 und die Gleitblechabschnitte 38a sind schmaler und ausserhalb der Peripherie der Auflageflächen 33 angeordnet. Bei dieser Ausführungsform sind sowohl die Gleitblechabschnitte 38a als auch die Scheiben 32 in der Höhe verstellbar. Dazu sind die Abschnitte 38a an einen Träger 50 montiert, der mittels eines Parallelogrammgestänges 51 am Schacht 16 vertikal beweglich gelagert ist. Der Träger 50 ist mittels eines Antriebs 52, zum Beispiel eines Pneumatikzylinders, begrenzt durch zwei einstellbare Anschläge 53 vertikal verschiebbar. Der Hub zwischen den Anschlägen 53 wird so eingestellt, dass er gleich der Dicke eines Produktes 12 ist. In der unteren Endstellung werden jeweils zwei Produkte 12, in der oberen ein Produkt 12 ausgeschoben, wenn die Scheiben 32 so gedreht sind, dass die Ausnehmungen 47 unter dem Schacht 16 sind. Der Gleitblechabschnitt 38a ist mit dem geneigten Gleitblech 38 über ein Scharnier 54 verbunden.

Der Motor 17 und die beiden demselben Schacht 16 zugeordneten Achsen 31 sind auf einem weiteren Träger 56 montiert, der mittels einer Linearführung 57 am Schacht 16 vertikal zwischen zwei einstellbaren Anschlägen 58 beweglich gelagert ist. Der Träger 56 ist mit einem weiteren Antrieb 59, zum Beispiel einem Pneumatikzylinder verbunden. Die Anschläge 58 werden so eingestellt, dass der Hub des Trägers 56 etwas mehr als die doppelte Dicke der Produkte 12 ist, und dass die Auflagefläche 33 in der unteren Endstellung etwas unterhalb der Oberseite der Gleitblechabschnitte 38a in deren unterer Stellung ist.

Im Betrieb ist beim Ausschieben eines Produktes 12 (in der oberen Stellung des Trägers 50) oder zweier Produkte 12 (bei abgesenktem Träger 50) der Träger 56 immer in der oberen Endstellung und die Scheiben 32 werden in der in Figur 6 dargestellten Art synchron mit dem Ausschieben der Produkte 12 mitgedreht, so dass das unterste verbleibende Produkt 12 im Schacht 16 ständig unterstützt bleibt. Sollen mit dem nächsten Finger 18 erneut ein oder zwei Produkte ausgeschoben werden, wird zunächst der Träger 56 abgesenkt, so dass das unterste Produkt 12 des Schachtes 16 auf seiner ganzen Länge gleichzeitig auf dem Gleitblechabschnitt 38a zur Auflage kommt. Hierauf werden die Scheiben 32 um 90° gedreht und der Träger 56 wieder in seine obere Endstellung angehoben. Die Antriebe 52, 59 werden ebenfalls von der Steuereinrichtung 22 gesteuert.

Bei dieser Ausführungsform wird die bloss einseitige Unterstützung des untersten im Schacht 16 verbleibenden Produktes 12 beim Ausschieben der Produkte 12 vermieden und es fällt nicht auf den Abschnitt 38a, sondern wird sanft darauf abgestellt. Diese Ausführungsform eignet sich daher insbesondere für empfindliche Produkte, zum Beispiel für rechteckige Biskuits, die in ihrer Längsmitte eine Schwachstelle zum leichten Entzweibrechen in zwei Hälften haben. Es können wahlweise keines oder ein Produkt 12 oder zwei Produkte 12 ausgeschoben werden.

Alternativ zum beschriebenen Ausführungsbeispiel kann der Träger 50 auch in zwei Stufen entsprechend der Dicke der Produkte 12 verstellbar sein. Dabei können die Antriebe 52, 59 zum Beispiel Servomotoren mit Winkelgebern sein, welche Gewindespindeln antreiben, die in an den Trägern 50, 56 befestigte Muttern eingreifen. Der Hub des Trägers 56 wird in diesem Fall auf etwas mehr als die dreifache Produktdicke eingestellt. Bei dieser Ausführungsform können wahlweise keines oder ein Produkt 12 oder zwei oder drei Produkte 12 ausgeschoben werden. Die Hub-Geschwindigkeiten der Träger 50, 56 werden von null auf Maximum und wieder auf null durch bekannte elektrische oder mechanische Mittel erreicht.

In Figur 9 ist mit gestrichelten Linien noch eine Alternative für die Höhenverstellung der Scheiben 32 dargestellt. Bei dieser Ausführungsform ist der Träger 56 starr mit dem Schacht 16 verbunden und der Antrieb 59 sowie die Anschläge 58 und die Führung 57 entfallen. Der untere Teil 31a der Achsen 31 ist mit dem oberen Teil über eine Kupplung 62 drehfest aber axial verschiebbar verbunden. Mit dem Teil 31a ist ein Nocken 63 starr verbunden, der in einer feststehenden Führungskurve 64 läuft. Der Hub der Scheiben 32 ist also mit deren Drehbewegung gekoppelt. Die Führungskurve 64 wird so ausgelegt, dass unmittelbar vor erreichen der Stellung, in welcher der in Drehrichtung hintere Rand der Auflagefläche 33 unter dem stromaufwärtigen Rand des Schachtes 16 gelangt, die Scheiben 32 abgesenkt und das unterste Produkt 12 auf dem Gleitblechabschnitt 38a abgelegt wird. Die Scheiben 32 werden hierauf weitergedreht in die Stellung, wo die Ausnehmung 47 unter dem Schacht 16 zu liegen kommt. Beim Durchgang des nächsten Fingers 18 werden die Scheiben wieder um 180° gedreht und durch die Führungskurve zunächst angehoben, so dass die Scheiben 32 in der oberen Stellung sind, wenn der vordere Rand der betreffenden Auflagefläche 33 unter den hinteren Schachtrand gelangt. Bei dieser Variante kann die Anzahl der ausgeschobenen Produkte 12 nur entsprechend der Anzahl Stufen gewählt werden, zwischen welchen der Träger 50 in der Höhe verstellt werden kann. Diese Variante hat den Vorteil, dass sie einfacher und kostengünstiger ist.

## Patentansprüche

1. Vorrichtung zum Bilden von Gruppen (11) von aufeinander liegenden, scheibenförmigen Produkten (12), wobei die Vorrichtung ein Transportorgan (10) mit abstehenden Fingern (18) aufweist, um die sich bildenden Gruppen (11) auf einer oberen, annähernd horizontalen Arbeitsstrecke (28) in Transportrichtung (A) zu schieben, wobei oberhalb der Arbeitsstrecke (28) mehrere in Transportrichtung (A) hintereinander angeordnete Schächte (16) angeordnet sind, welche Stapel (24) flach aufeinander liegender Produkte (12) enthalten und beabstandet oberhalb der Arbeitsstrecke (28) enden, wobei die Finger (18) jeweils eine Anzahl von Produkten (12) aus dem unteren Ende der Schächte (16) ausschieben, dadurch gekennzeichnet, dass am unteren Ende der Schächte (16) verstellbare Unterstellmittel (32, 38a) angeordnet sind, welche durch steuerbare Antriebsmittel (17, 52) einzeln in mindestens zwei Stellungen verstellbar sind, in welchen sich das untere Ende der Stapel (24) auf unterschiedlicher Höhe befindet, dass jedem Schacht (16) ein Fühler (23) zugeordnet ist, welcher die An- oder Abwesenheit des Stapels (24) im betreffenden Schacht (16) bis zur Position des Fühlers misst, und dass alle Fühler (23) mit einer gemeinsamen Steuereinrichtung (22) verbunden sind, welche die Antriebsmittel (17, 52) der einzelnen Schächte (16) derart steuert, dass eine ungleichmässige Zufuhr von Produkten (12) zu den Schächten (16) automatisch ausgeglichen wird.

2. Vorrichtung nach Anspruch 1, wobei eine der Stellungen derart gewählt ist, dass die Unterseite des betreffenden Stapels (24) oberhalb der Oberkante der durchlaufenden Finger (18) ist.

3. Vorrichtung nach Anspruch 1 oder 2, wobei die Unterstellmittel (32) auf beiden Seiten der Arbeitsstrecke (28) angeordnet sind.

4. Vorrichtung nach einem der Ansprüche 1 bis 3, wobei die Unterstellmittel durch Scheiben (32) gebildet sind, welche um Achsen (31) drehbar sind, welche vorzugsweise senkrecht sind.

5. Vorrichtung nach Anspruch 4, wobei an jedem Schachtende zwei Scheiben (32) angeordnet sind, welche gegenläufig synchron drehbar sind.

6. Vorrichtung nach Anspruch 4 oder 5, wobei die Scheiben (32) mindestens zwei in Achsrichtung gegeneinander abgestufte Auflageflächen (33, 34) aufweisen.

7. Vorrichtung nach einem der Ansprüche 4 bis 6, wobei die Scheiben (32) mindestens eine Ausnehmung (47) aufweisen und unterhalb der Schächte (16) Auflageelemente (38a) als Anschlag für den betreffenden Stapel (24) angeordnet sind.

8. Vorrichtung nach Anspruch 7, wobei die Auflageelemente (38a) durch einen steuerbaren Antrieb (52) in mindestens einer Stufe in der Höhe verstellbar sind.

9. Vorrichtung nach Anspruch 7 oder 8, wobei die Scheiben (32) durch Hubelemente (59, 63, 64) parallel zu ihren Achsen (31) verstellbar sind.

10. Vorrichtung nach einem der Ansprüche 1 bis 3, wobei die Unterstellmittel horizontale, in der Höhe verstellbare Gleitblechabschnitte (38a) sind.

11. Vorrichtung nach einem der Ansprüche 1 bis 10, wobei die Antriebsmittel (17) Servomotoren sind.

12. Vorrichtung nach einem der Ansprüche 1 bis 11, wobei stromabwärts mindestens der ersten Schächte (16) geneigt zur Transportrichtung (A) verlaufende Gleitelemente (38) angeordnet sind.

## Claims

1. Apparatus for forming groups (11) of disc-like products (12) located one above the other, it being the case that the apparatus has a transporting means (10) with projecting fingers (18) in order to push in the transporting direction (A) the groups (11) forming on a top, more or less horizontal operating section (28), it being the case that arranged above the operating section (28) are a plurality of shafts (16) which are arranged one behind the other in the transporting direction (A), contain stacks (24) of products (12), located in a flat state one above the other, and terminate at a distance above the operating section (28), it being the case that the fingers (18) each push a number of products (12) out of the bottom end of the shafts (16), characterized in that arranged at the bottom end of the shafts (16) are adjustable supporting means (32, 38a) which can be adjusted individually, by controllable drive means (17, 52), into at least two positions, in which the bottom end of the stacks (24) is located at different levels, in that each shaft (16) is assigned a sensor (23) which measures the presence or absence of the stack (24) in the relevant shaft (16) up to the position of the sensor, and in that all the sensors (23) are connected to a common control device (22) which controls the drive means (17, 52) of the individual shafts (16) such that there is automatic compensation for a non-uniform feed of products (12) to the shafts (16).

2. Apparatus according to Claim 1, it being the case that one of the positions is selected such that the underside of the relevant stack (24) is above the top edge of the through-running fingers (18).

3. Apparatus according to Claim 1 or 2, it being the case that the supporting means (32) are arranged on both sides of the operating section (28).

4. Apparatus according to one of Claims 1 to 3, it being the case that the supporting means are formed by discs (32) which can be rotated about spindles (31) which are preferably vertical.

5. Apparatus according to Claim 4, it being the case that arranged at each shaft end are two discs (32) which can be rotated synchronously in opposite directions.

6. Apparatus according to Claim 4 or 5, it being the case that the discs (32) have at least two bearing surfaces (33, 34) which are stepped in the axial direction in relation to one another.

7. Apparatus according to one of Claims 4 to 6, it being the case that the discs (32) have at least one cutout (47), and bearing elements (38a) are arranged beneath the shafts (16) as a stop for the relevant stack (24).

8. Apparatus according to Claim 7, it being the case that the bearing elements (38a) can be adjusted vertically in at least one step by a controllable drive (52).

9. Apparatus according to Claim 7 or 8, it being the case that the discs (32) can be adjusted parallel to their axes (31) by lifting elements (59, 63, 64).

10. Apparatus according to one of Claims 1 to 3, it being the case that the supporting means are horizontal, vertically adjustable sliding-plate portions (38a).

11. Apparatus according to one of Claims 1 to 10, it being the case that the drive means (17) are servomotors.

12. Apparatus according to one of Claims 1 to 11, it being the case that sliding elements (38) running in an inclined manner in relation to the transporting direction (A) are arranged downstream at least of the first shafts (16).

## Revendications

1. Dispositif pour former des groupes (11) de produits (12) en forme de disques empilés, le dispositif présentant un organe de transport (10) avec des doigts éloignés (18), afin de déplacer les groupes (11) qui se forment sur un parcours de travail (28) supérieur, approximativement horizontal, dans la direction de transport (A), dans lequel, au-dessus du parcours de travail (28) sont disposés plusieurs fourreaux (16) disposés les uns derrière les autres dans la direction de transport (A), qui contiennent des piles (24) de produits (12) empilés à plat et se terminent à une certaine distance au-dessus du parcours de travail (28), les doigts (18) poussant chacun un certain nombre de produits (12) hors de l'extrémité inférieure du fourreau (16), caractérisé en ce qu'à l'extrémité inférieure des fourreaux (16), sont disposés des moyens de dépose ajustables (32, 38a) qui peuvent être ajustés par des moyens d'entraînement commandables (17, 52) individuellement en au moins deux positions, dans lesquelles l'extrémité inférieure de la pile (24) se trouve à une hauteur variable, en ce qu'à chaque fourreau (16) est associé un détecteur (23) qui détecte la présence ou l'absence de la pile (24) dans le fourreau concerné (16) jusqu'à la position du détecteur, et en ce que tous les détecteurs (23) sont reliés à un dispositif de commande commun (22), qui commande les moyens d'entraînement (17, 52) des fourreaux individuels (16), de telle sorte qu'une alimentation non régulière des fourreaux (16) en produits (12)soit automatiquement compensée.

2. Dispositif selon la revendication 1, dans lequel l'une des positions est choisie de telle sorte que la face inférieure de la pile concernée (24) soit au-dessus de l'arête supérieure du doigt passant (18).

3. Dispositif selon la revendication 1 ou 2, dans lequel les moyens de dépose (32) sont disposés des deux côtés du parcours de travail (28).

4. Dispositif selon l'une quelconque des revendications 1 à 3, dans lequel les moyens de dépose sont formés par des disques (32), qui sont susceptibles de tourner autour d'axes qui sont de préférence perpendiculaires.

5. Dispositif selon la revendication 4, dans lequel à chaque extrémité de fourreau, sont disposés deux disques (32) qui sont susceptibles de tourner de manière synchrone dans des sens opposés.

6. Dispositif selon la revendication 4 ou 5, dans lequel les disques (32) présentent au moins deux surfaces d'appui (33, 34) échelonnées l'une par rapport à l'autre dans le sens axial.

7. Dispositif selon l'une quelconque des revendications 4 à 6, dans lequel les disques (32) présentent un évidement (47) et des éléments d'appui (38a) sont disposés sous les fourreaux (16) en tant que butée pour la pile correspondante (24).

8. Dispositif selon la revendication 7, dans lequel les éléments d'appui (38a) peuvent être ajustés par un entraînement commandable (52) d'au moins un échelon en hauteur.

9. Dispositif selon la revendication 7 ou 8, dans lequel les disques (32) peuvent être ajustés parallèlement à leurs axes (31) par des éléments de moyeu (59, 63, 64).

10. Dispositif selon l'une quelconque des revendications 1 à 3, dans lequel les moyens de dépose sont des portions de tôle de glissement (38a) horizontales, ajustables en hauteur.

11. Dispositif selon l'une quelconque des revendications 1 à 10, dans lequel les moyens d'entraînement (17) sont des servomoteurs.

12. Dispositif selon l'une quelconque des revendications 1 à 11, dans lequel en aval d'au moins les premiers fourreaux (16) sont disposés des éléments de glissement (38) inclinés par rapport à la direction de transport (A).
